(19) Europäisches Patentamt
European Patent Office
Office européen des brevets

(11) EP 1 069 093 B1

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.[7]: **C04B 41/48**

(21) Anmeldenummer: **00115302.2**

(22) Anmeldetag: **14.07.2000**

# (54) Beschichtungsmittel und Verfahren zur Beschichtung von mineralischen Formkörper

Coating material and method of coating mineral bodies

Matériau de revêtement et procédé de revêtement de corps minéraux

(84) Benannte Vertragsstaaten:
**AT DE FR GB IT SE**

(30) Priorität: **16.07.1999 DE 19933500**

(43) Veröffentlichungstag der Anmeldung:
**17.01.2001 Patentblatt 2001/03**

(73) Patentinhaber: **BASF AKTIENGESELLSCHAFT**
**67056 Ludwigshafen (DE)**

(72) Erfinder:
- **Schwartz, Manfred, Dr.**
  **67227 Frankenthal (DE)**
- **Bechert, Bertold**
  **67269 Grünstadt (DE)**

(74) Vertreter: **Kinzebach, Werner, Dr. et al**
**Patentanwälte**
**Reitstötter, Kinzebach und Partner**
**Postfach 86 06 49**
**81633 München (DE)**

(56) Entgegenhaltungen:
**GB-A- 2 251 246**
**US-A- 4 730 020**
**US-A- 5 215 783**
**US-A- 5 824 734**

EP 1 069 093 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur Beschichtung mineralischer Formkörper mit filmbildenden, wässrigen Zubereitungen.

Unter mineralischen Formkörpern sind hier und im Folgenden Formkörper aus mineralischen Zuschlägen, wie Sand, Ton, zerkleinertem Gestein etc. und einem mineralischen Bindemittel sowie gegebenenfalls üblichen Zusätzen zu verstehen. Mineralische Bindemittel sind allgemein bekannt. Es handelt sich z. B. um feinteilige anorganische Stoffe, wie Kalk, Gips, Ton und/oder Zement, die im feuchten Zustand geformt werden können und sich beim Selbstüberlassen an der Luft oder auch unter Wasser, gegebenenfalls unter Einwirkung erhöhter Temperatur, nach einer gewissen Zeit steinartig verfestigen.

Die Zuschläge bestehen in der Regel aus körnigem oder faserförmigem natürlichem oder künstlichem Gestein (Kies, Sand, Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mitverwendet.

Beispiele für erfindungsgemäß zu beschichtende mineralische Formkörper sind z. B. Betonröhren, z. B. für Abwasser, Betondachsteine oder Randsteine, Treppenstufen, Bodenplatten, Sockelplatten auf der Basis mineralischer Bindemittel sowie Faserzementplatten, d. h. flächige mineralische Formkörper, die mit anorganischen oder organischen Fasern, z. B. Polyester- oder Nylonfasern, gefüllt sind. Mineralische Formkörper, insbesondere solche, die Kies und/oder Sand als Zuschläge enthalten, weisen oft eine hohe Oberflächenrauhigkeit auf. Diese Oberflächenrauhigkeit ist für viele Anwendungen nicht nachteilig und oft sogar erwünscht, z. B. bei Bodenplatten und Treppenstufen, die diesen eine verbesserte Tritt- und Rutschfestigkeit verleiht.

Bei einigen Anwendungen bringt die hohe Oberflächenrauhigkeit auch Nachteile mit sich. So führt die Oberflächenrauhigkeit z. B. bei Betondachsteinen dazu, dass die Oberfläche leichter durch Algen, Moose und Flechten bewachsen werden kann, wodurch sich das optische Erscheinungsbild und in vielen Fällen auch die Haltbarkeit verschlechtert. Zudem führt die Oberflächenrauhigkeit dazu, dass trotz einer durch Zugabe geeigneter Pigmente vergleichbaren Farbgebung im Allgemeinen das Erscheinungsbild gebrannter Tondachziegel nicht erreicht werden kann.

Nachteilig an mineralischen Formkörpern ist ferner, dass unter dem Einfluss der Witterung (insbesondere der Einwirkung von Wasser) die kationischen Bestandteile wie $Ca^{2+}$ im Laufe der Zeit herausgelöst werden, was ihre Festigkeit mindert. Dabei treten oft auch "Ausblühungen" auf. Diese sind vermutlich darauf zurückzuführen, dass mehrwertige Kationen wie $Ca^{2+}$ durch Reaktion mit dem Kohlendioxid aus der Luft an der Oberfläche der mineralischen Formkörper unansehnliche weiße Kalkflecken bilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Zur Erhöhung der Witterungsbeständigkeit und zur Verbesserung der optischen Eigenschaften werden die mineralischen Formkörper häufig mit einer Beschichtung versehen. Hierzu werden heute in der Regel wässrige Beschichtungssysteme eingesetzt, die als filmbildenden Bestandteil (Bindemittel) eine wässrige Polymerisatdispersion enthalten. Übliche Bindemittel umfassen Styrol/Acrylester-Copolymerisate, Homo- und Copolymerisate des Vinylacetats, Reinacrylate und ähnliche (vgl. z. B. DE 21 64 256). Die damit erhältlichen Beschichtungen vermochten jedoch den Durchtritt der kationischen Bestandteile (Ausblühen) nicht in befriedigender Weise zu verhindern. Zudem schmutzen derartige Beschichtungen leicht an.

Der Schutz mineralischer Formkörper vor den oben beschriebenen Ausblühungen konnte auch durch Beschichtungsmassen auf der Basis von Styrol/Acrylat-Dispersionen bzw. Reinacrylatdispersionen der EP-A-469 295 und der DE-A-195 14 266 verbessert werden. Hierfür empfiehlt die EP-A-469 295 die Verwendung eines speziellen anionischen Emulgators und die DE-A-195 14 266 die Verwendung von Polymerisaten, welche spezielle Monomere mit Sulfonatgruppen einpolymerisiert enthalten.

Die vorgenannten Zubereitungen werden in der Regel in zwei Schichten auf den mineralischen Formkörper aufgebracht. So erhält man durch zweifache Beschichtung mit Methylmethacrylat/Alkylacrylat-Polymeren (sog. Reinacrylate), welche einen geringen Pigmentgehalt aufweisen, mineralische Formkörper, die die gewünschten Oberflächeneigenschaften zeigen, wie z. B. einen hohen Glanz, jedoch mit eingeschränktem Schutz vor Ausblühungen. Die Beschichtung mit einer ersten farbgebenden, vor Ausblühungen schützenden Zubereitung auf Basis von Styrol/Acrylat-Copolymerisaten und anschließend mit einer zweiten Zubereitung auf Basis von Reinacrylaten führt zwar zu gutem Schutz vor Ausblühungen und gewährleistet einen hohen Glanz, jedoch sind diese Beschichtungen problematisch hinsichtlich der Langzeitstabilität unter Bewitterungsbedingungen, die sich in Blasenbildung und mangelnder Haftung äußert.

Die DE-198 10 052.3 offenbart ein Verfahren zur Beschichtung mineralischer Formkörper, bei denen nacheinander eine 1. und eine 2. Zubereitung aufgetragen wird, wobei die 2. Zubereitung eine um wenigstens 10 geringere Pigmentvolumenkonzentration aufweist. Die Auswahl der den Copolymeren der 1. und 2. Zubereitung zugrunde liegenden Monomeren geschieht nach speziellen Auswahlkriterien. Die nach diesem Verfahren hergestellten mineralischen Formkörper zeigen gegenüber herkömmlichen, zweifach beschichteten Formkörpern eine verringerte Blasenbildungsneigung und verbesserte Oberflächeneigenschaften.

Seit einiger Zeit besteht eine hohe Nachfrage nach Betondachsteinen, die den viel teureren gebrannten oder glasierten und gebrannten Tondachziegeln im optischen Eindruck und in der Haltbarkeit möglichst nahe kommen. Das optische Erscheinungsbild und die hohe Haltbarkeit gebrannter Tondachziegel sind zu einem großen Anteil auf die gegenüber konventionellen Betondachsteinen viel geringere Oberflächenrauhigkeit zurückzuführen. Die durch die größere Oberflächenrauhigkeit konventioneller Betondachsteine bedingten Unterschiede zu gebrannten Tondachziegeln lassen sich auch durch das Aufbringen von polymeren Beschichtungen nur teilweise verringern. Daher stellt man zunehmend Betondachsteine mit geringerer Oberflächenrauhigkeit her. Solche mineralischen Formkörper sind zum einen durch die Verwendung von feineren Zuschlägen, z. B. Feinsand statt Kies oder Sand, zugänglich. Zum anderen kann man konventionelle Betondachsteine mit einer mineralischen Beschichtungsmasse, z. B. einem Zementslurry, versehen, die als Ausgleichs- und Füllmasse dient und so ebenfalls eine glatte Oberfläche ermöglicht. Durch das Aufbringen von konventionellen Beschichtungen auf Basis von Polymeren auf solche Betondachsteine mit glatten Oberflächen lassen sich Betondachsteine herstellen, die ein den Tondachziegeln vergleichbares optisches Erscheinungsbild aufweisen. Nachteilig an diesen Betondachsteinen ist jedoch, dass aufgrund der glatteren Oberflächen des mineralischen Formkörpers die konventionellen polymeren Beschichtungen eine stark verschlechterte Haftung zeigen, so dass die Stabilität des Betondachstein-Beschichtungssystems deutlich geringer ist als bei herkömmlichen mit polymeren Beschichtungen versehenen Betondachsteinen mit rauherer Oberfläche. Die geringere Stabilität solcher Betondachstein-Beschichtungssysteme äußert sich vor allem durch erhöhte Anfälligkeit gegen Ausblühungen und Blasenbildung.

Der vorliegenden Erfindung liegt somit die Aufgabe zugrunde, ein Verfahren und ein Mittel zur Beschichtung mineralischer Formkörper bereitzustellen, das den Beschichtungen eine gute Haftung und guten Schutz vor Ausblühungen, auch auf mineralischen Formkörpern mit besonders glatten Oberflächen, unter Bewitterungsbedingungen verleiht. Darüber hinaus soll das Verfahren bzw. Mittel dem mineralischen Formkörper sehr gute Oberflächeneigenschaften verleihen und eine einfache Gestaltung des optischen Erscheinungsbildes, z. B. des Glanzgrades der Oberfläche, ermöglichen.

Es wurde nun überraschend gefunden, dass man beschichtete mineralische Formkörper erhält, die die gewünschten Eigenschaften ohne Nachteile aufweisen, wenn man nacheinander wenigstens drei wässrige, filmbildende Copolymerisat-Zubereitungen bestimmter Pigmentvolumenkonzentration auf den mineralischen Formkörper aufbringt.

Die vorliegende Erfindung betrifft somit ein Verfahren zur Beschichtung mineralischer Formkörper mit wässrigen Zubereitungen, die aus den Monomeren A, B und gegebenenfalls C aufgebaute Copolymerisate in dispers verteilter Form als filmbildende Bestandteile enthalten, wobei

- die Monomere A ausgewählt sind unter Vinylaromaten und Methacrylsäureestern von $C_1$-$C_4$-Alkanolen,
- die Monomere B ausgewählt sind unter Methacrylsäureestern von $C_5$-$C_{12}$-Alkanolen, Acrylsäureestern von $C_1$-$C_{12}$-Alkanolen und Vinylestern aliphatischer Carbonsäuren und
- die Monomere C ethylenisch ungesättigte Monomere umfassen, die von den Monomeren A und B verschieden sind,

wobei man auf den mineralischen Formkörper nacheinander eine 1. Zubereitung mit einer Pigmentvolumenkonzentration von weniger als 20 aufbringt, gegebenenfalls trocknet, eine 2. Zubereitung mit einer Pigmentvolumenkonzentration von 10 bis 70 aufbringt, gegebenenfalls trocknet, und eine 3. Zubereitung mit einer PVK von weniger als 50 aufbringt, wobei die Pigmentvolumenkonzentration der 1. Zubereitung um einen Wert von mindestens 10 kleiner ist als die der 2. Zubereitung.

Als Pigmentvolumenkonzentration (PVK) bezeichnet man den mit 100 multiplizierten Quotienten aus Pigmentvolumen plus Füllstoffvolumen und Bindemittelvolumen plus Pigmentvolumen plus Füllstoffvolumen (analog Ullmann's Encyclopedia of Industrial Chemistry, 4. Auflage, Band 15, S. 667).

Üblicherweise erfolgt die Herstellung der in den Zubereitungen enthaltenen Copolymerisate durch radikalische Polymerisation wenigstens zweier ethylenisch ungesättigter Monomere A, B und gegebenenfalls weiterer Monomere C pro Copolymerisat.

Geeignete Monomere A sind vinylaromatische Monomere, wie Styrol, α-Methylstyrol, o-Chlorstyrol oder Vinyltoluole und Methacrylsäureester von $C_1$-$C_4$-Alkanolen. Bevorzugte Methacrylsäureester $C_1$-$C_4$-Alkanolen sind Methacrylsäuremethylester, Methacrylsäureethylester, Methacrylsäure-n-propylester, Methacrylsäureisopropylester und Methacrylsäure-n-butylester. Besonders bevorzugt als Monomere A sind Methacrylsäuremethylester und/oder Styrol. In bevorzugten Ausführungsformen des Verfahrens bzw. Mittels sind die Monomere A entweder Styrol oder Methylmethacrylat. Geeignete Monomere B umfassen von A verschiedene Ester α,β-ethylenisch ungesättigter Carbonsäuren mit $C_1$-$C_{12}$-Alkanolen. Geeignet sind beispielsweise die Ester von $C_3$-$C_8$-Monocarbonsäuren, wie Acrylsäure, Crotonsäure und Vinylessigsäure. Bevorzugt sind die Ester der Acrylsäure. Geeignete $C_1$-$C_{12}$-Alkanole umfassen Methanol, Ethanol, n-Propanol, i-Propanol, 1-Butanol, 2-Butanol, Isobutanol, tert.-Butanol, n-Hexanol, 2-Ethylhexanol und $C_5$-$C_8$-Cycloalkanole, wie Cyclopentanol oder Cyclohexanol. Bevorzugt sind insbesondere Ester der Acrylsäure mit $C_2$-$C_8$-Alkanolen, besonders bevorzugt sind Ethylacrylat, n-Butylacrylat und 2-Ethylhexylacrylat. Ebenfalls geeignet sind die Methacrylsäureester von $C_5$-$C_{12}$-Alkanolen. Geeignete Monomere B sind auch Vinylester von aliphatischen $C_1$-$C_{18}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel be-findliche Monomere VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden).

Die Monomere A und B machen in der Regel, bezogen auf die Gesamtmonomermenge, wenigstens 65 Gew.-%, vorzugsweise wenigstens 80 Gew.-% und insbesondere wenigstens 90 Gew.-% aus. Die Monomere C werden in der Regel in Mengen < 35 Gew.-%, vorzugsweise < 10 Gew.-% und insbesondere < 5 Gew.-%, bezogen auf die Gesamtmenge der Monomere A, B und C, verwendet. Wenn die Copolymerisate Monomere C einpolymerisiert enthalten, enthalten sie in der Regel wenigstens 0,1 Gew.-%, vorzugsweise wenigstens 1 Gew.-% Monomere C einpolymerisiert.

Die Copolymerisate enthalten vorzugsweise wenigstens ein weiteres Monomer C einpolymerisiert. Geeignete Monomere C umfassen von Monomeren A und B verschiedene, α,β-ethylenisch ungesättigte Monomere. Hierzu zählen α,β-ethylenisch ungesättigte $C_3$-$C_8$-Mono- und Dicarbonsäuren (Monomere C1), wie Acrylsäure, Methacrylsäure, Crotonsäure, Vinylessigsäure, Maleinsäure, Fumarsäure, Itaconsäure, Acrylamidoglykolsäure und Methacrylamidoglykolsäure, die Amide von $C_3$-$C_8$-Monocarbonsäuren (Monomere C2), insbesondere Acrylamid und Methacrylamid, ethylenisch ungesättigte Sulfonsäuren (Monomere C3), wie Vinylsulfonsäure, 2-Acrylamido-2-methylpropansulfonsäure, 2-Acryloxyethansulfon-säure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze. Die Monomere C1 werden üblicherweise in Mengen von 0,1 bis 10 Gew.-%, vorzugsweise von 0,2 bis 5 Gew.-% und insbesondere 0,5 bis 2,5 Gew.-%, bezogen auf die Gesamtmenge an $_M$onomeren A + B + C eingesetzt. Die Monomere C2 werden üblicherweise in Mengen von 0,1 bis 10 Gew.-%, vorzugsweise 0,2 bis 5 Gew.-% und insbesondere 0,5 bis 2,5 Gew.-%, wiederum bezogen auf die Gesamtmenge an Monomeren A + B + C, eingesetzt. Die Monomere C3 werden üblicherweise in Mengen von 0,05 bis 5 Gew.-% und vorzugsweise von 0,1 bis 3 Gew.-%, bezogen auf die Gesamtmenge an $_M$onomeren A + B + C, eingesetzt. Bevorzugt unter den Monomeren C1 bis C3 sind die Monomere C1, insbesondere Acrylsäure, Methacrylsäure und Itaconsäure, und die Monomere C2, insbesondere Acrylamid und Methacrylamid. Ganz besonders bevorzugt enthalten die Copolymere wenigstens ein Monomer C1 oder C3 und wenigstens ein Monomer C2 einpolymerisiert. Vorzugsweise liegt die Gesamtmenge der Monomere C1 bis C3 im Bereich von 0,1 bis 10 Gew.-%, insbesondere im Bereich von 0,2 bis 5 Gew.-%, bezogen auf die Gesamtmenge an Monomeren A + B + C. Die Monomere C können auch Monomere C4 umfassen. Geeignete Monomere C4 sind beispielsweise ethylenisch ungesättigte, Silangruppen enthaltende Monomere, wie die Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan. Die Monomere C4 werden, sofern erwünscht, in Mengen von 0,05 bis 5 Gew.-%, insbesondere 0,1 bis 2 Gew.-%, bezogen auf die Gesamtmenge der Monomere A + B + C, eingesetzt. Vorzugsweise kommen die Monomere C4 zusammen mit mindestens einem der Monomere C1, C2 und/oder C3 zur Anwendung.

In bestimmten Ausführungsformen können die Monomere C auch vernetzende Monomere umfassen, vorzugsweise sind jedoch die Copolymerisate der 1. und 2. Zubereitung frei von vernetzenden Monomeren.

Geeignete vernetzende Monomere C sind vorzugsweise Vinylaromaten, z. B. Divinylbenzol und Divinylnaphthalin, Polyvinylester oder Polyallylester von Polycarbonsäuren, z. B. Diallylmaleat, Diallylfumerat und Diallylphthalat, Poly(meth)acrylester von Polyolen, z. B. Di- bzw. Triester der Acrylsäure bzw. Methacrylsäure mit Ethylenglykol, Propylenglykol, Butandiol und Hexandiol, z. B. Ethylenglykoldi(meth)acrylat, Propylenglykoldi(meth)acrylat und Butandioldi(meth)acrylat, Divinyl- und Diallylether von Polyalkylenglykolen, z. B. Polyethylenglykoldivinylether, Polyethylenglykoldiallylether, Polypropylenglykoldivinylether und Di(meth)acrylsäureester mit Polyalkylenglykolen mit einem Molekulargewicht von bis zu 3.500, z. B. Diethylenglykoldi(meth)acrylat, Triethylenglykoldi(meth)acrylat, Tripropylenglykoldi (meth)acrylat, N,N-Divinylethylenharnstoff, Triallylcyanurat und besonders bevorzugt Ester der Acrylsäure oder Methacrylsäure mit $C_3$-$C_6$-Alkenolen, cyclischen $C_5$-$C_7$-Alkenolen und polycyclischen $C_7$-$C_{12}$-Alkenolen. Ganz besonders bevorzugt sind Acrylsäureallylester, Acrylsäuremethallylester, Acrylsäurecyclohexenylester, Acryltricyclodecenylester, Methacrylsäureallylester, Methacrylsäuremethallylester, Methacrylsäurecyclohexenylester und Methacrylsäuretricyclodecenylester, insbesondere Methacrylsäureallyl-ester. Die vernetzenden Monomere C können Mengen von 0,01 bis 5 Gew.-%, bevorzugt 0,1 bis 2,5 Gew.-% und besonders bevorzugt 0,5 bis 1,5 Gew.-% in den Copolymerisaten einpolymerisiert sein.

In einer bevorzugten Ausführungsform enthält nur das Copolymerisat der 3. Zubereitung vernetzende Monomere C, insbesondere die vorstehend als bevorzugt genannten vernetzenden Monomere C einpolymerisiert, und zwar in einer Menge von vorzugsweise 0,01 bis 1,9 Gew.-%, insbesondere 0,05 bis 1,5 Gew-% und besonders bevorzugt 0,5 bis 1,2 Gew.-%.

In weiteren bevorzugten Ausführungsformen enthält keines der Copolymerisate vernetzende Monomere C.

In einer weiteren bevorzugten Ausführungsform des erfindungsgemäßein Verfahrens sind die den 1., 2. und 3. Zubereitungen zugrunde liegenden Copolymerisate identisch oder im Wesentlichen gleich und die Zubereitungen unterscheiden sich hauptsächlich durch die Ausgestaltung der Zubereitungen, insbesondere durch die Pigmentvolumenkonzentration.

In einer weiteren bevorzugten Ausführungsform sind lediglich die der 1. und der 2. Zubereitung zugrunde liegenden Copolymerisate identisch oder im Wesentlichen gleich, und die 1. und die 2. Zubereitung unterscheiden sich hauptsächlich durch die Ausgestaltung, insbesondere durch die Pigmentvolumenkonzentration. In dieser Ausführungsform enthält das der 3. Zubereitung zugrunde liegende Copolymerisat vorzugsweise 0,01 bis 1,9 Gew.-% wenigstens eines vernetzend wirkenden Monomers, insbesondere wenigstens eines der vorstehend als bevorzugt genannten Ester der Acrylsäure oder Methacrylsäure mit Alkenolen.

In einer weiteren bevorzugten Ausführungsform sind für die Copolymerisate wenigstens zweier Zubereitungen gleiche Monomere A und/oder gleiche Monomere B ausgewählt.

In einer weiteren bevorzugten Ausführungsform unterscheiden sich die den 1., 2. und 3. Zubereitungen zugrunde liegenden Copolymerisate hinsichtlich der Mengenverhältnisse der einpolymerisierten Monomere A und B. Vorzugsweise unterscheiden sich jedoch die Mengenverhältnisse der Monomeren A zu B in zwei nacheinander aufgetragenen Zubereitungen um weniger als 30 % und insbesondere um 10 bis 20 %. Auch in dieser Ausführungsform enthält das der 3. Zubereitung zugrunde liegende Copolymerisat vorzugsweise 0,01 bis 1,9 Gew.-% wenigstens eines vernetzend wirkenden Monomers, insbesondere wenigstens eines der vorstehend als ganz besonders bevorzugt genannten Ester der Acrylsäure oder Methacrylsäure mit Alkenolen.

In einer weiteren bevorzugten Ausführungsform wird für die Copolymerisate der 1., 2. und 3. Zubereitung das gleiche Monomer B, insbesondere n-Butylacrylat oder 2-Ethylhexylacrylat, und gegebenenfalls gleiche Monomere C eingesetzt. Dagegen ist das Monomer A für das Copolymerisat jeder Zubereitung entweder ein Vinylaromat, insbesondere Styrol, oder ein Methacrylsäureester von $C_1$-$C_4$-Alkanolen, insbesondere Methylmethacrylat.

In einer bevorzugten Ausführungsform ist das Mengenverhältnis A:B für die Copolymerisate wenigstens zweier Zubereitungen identisch.

Wenn die 3. Zubereitung vernetzende Monomere C, insbesondere die Ester der (Meth)acrylsäure mit Alkenolen, einpolymerisiert enthält, wird sie vorzugsweise in unpigmentierter/ungefüllter Form eingesetzt.

In den Copolymerisaten liegt das Mengenverhältnis der einpolymerisierten Monomere A:B in der Regel zwischen 80:20 und 20:80 Gew.-%.

Typische Monomerkombinationen A/B sind:

- Styrol: n-Butylacrylat im Gewichtsverhältnis 35:65 bis 80:20,
- Styrol: 2-Ethylhexylacrylat im Gewichtsverhältnis 35:65 bis 80:20,
- Methylmethacrylat: n-Butylacrylat im Gewichtsverhältnis 40:60 bis 80:20,
- Methylmethacrylat: 2-Ethylhexylacrylat im Gewichtsverhältnis 35:65 bis 80:20,
- ferner ternäre und quartäre Monomermischungen A/B, bei denen ein Teil des Styrols durch Methylmethacrylat und/oder n-Butylmethacrylat ersetzt ist, oder ein Teil des n-Butylacrylats durch 2-Ethylhexylacrylat, z. B.:
  - Methylmethacrylat : Styrol : 2-Ethylhexylacrylat im Gewichtsverhältnis 20:20:60,
  - n-Butylmethacrylat : Styrol : 2-Ethylhexylacrylat im Gewichtsverhältnis 35:10:55,
  - Methylmethacrylat : n-Butylmethacrylat : n-Butylacrylat im Gewichtsverhältnis 30:35:35,
  - Styrol : n-Butylacrylat : 2-Ethylhexylacrylat im Gewichtsverhältnis 50:25:25 und
  - Styrol : Methylmethacrylat : n-Butylacrylat : 2-Ethylhexylacrylat im Gewichtsverhältnis 20:20:30:30.

Es hat sich als vorteilhaft erwiesen, dass wenigstens die 1. Zubereitung "ausblühsicher" ist, d. h. einen guten Schutz mineralischer Formkörper gegen Ausblühen bietet. Eine hohe Ausblühsicherheit kann zum einen durch eine geeignete Auswahl des Emulgators erreicht werden. Geeignete, die Ausblühsicherheit erhöhende Emulgatoren sind Natriumlaurylsulfat und besonders bevorzugt grenzflächenaktive Substanzen der Formel I,

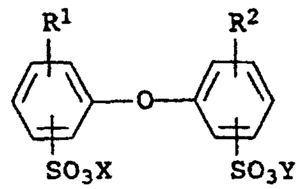

(I)

worin $R^1$ und $R^2$ Wasserstoff oder $C_4$-$C_{24}$-Alkyl bedeuten und nicht gleichzeitig Wasserstoff sind, und X und Y für Alkalimetallionen und/oder Ammoniumionen stehen. Die Verbindungen I sind allgemein bekannt, z. B. aus der EP-A-469 295. Besonders vorteilhaft sind Verbindungen I, in denen X und Y Natrium, $R^1$ ein verzweigter Alkylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Vorzugsweise setzt man zumindest als 1. Zubereitung eine Zubereitung ein, die 0,5 bis 10 Gew.-%, insbesondere 1,0 bis 7,5 Gew.-% und besonders bevorzugt 1,5 bis 5 Gew.-%, bezogen auf das Copolymerisat, einer wie vorstehend definierten Verbindung der Formel I enthält.

Zum anderen kann die Ausblühsicherheit durch eine geeignete Auswahl der Monomere C3 und/oder C4 erreicht werden. So erhält man eine gesteigerte Ausblühsicherheit vorzugsweise dadurch, dass man wenigstens für die 1. Zubereitung ein Copolymer einsetzt, das als Monomer C wenigstens eine ethylenisch ungesättigte Sulfonsäure (C3) und/oder ein ethylenisch ungesättiges Silan (C4) einpolymerisiert enthält. Geeignete solche Monomere C3 und C4 sind vorstehend beschrieben. Besonders geeignet sind (meth)acrylgruppentragende Sulfonsäuren, insbesondere 2-Acrylamido-2-methylpropansulfonsäure und (meth)acrylgruppenaufweisende Silane, insbesondere (meth)acryloxyalkylhydroxyalkylsilane, und besonders bevorzugt Methacryloylpropyltrimethoxysilan. Geeignete Mengenbereiche für diese Monomere sind vorstehend beschrieben.

In bevorzugten Ausführungsformen enthält die 1. Zubereitung sowohl einen Emulgator der Formel I als auch ein Copolymerisat, das eines der vorgenannten Monomere C3 oder C4 einpolymerisiert enthält.

In besonders bevorzugten Ausführungsformen enthalten die Copolymerisate 40 bis 60 Gew.-% Monomere A, vorzugsweise Methylmethacrylat oder Styrol, 35 bis 55 Gew.-% Monomere B, vorzugsweise n-Butylacrylat oder 2-Ethylhexylacrylat, und 0,5 bis 3 Gew.-%, insbesondere 1 bis 2,5 Gew.-% Monomere C1, vorzugsweise Acrylsäure oder Methacrylsäure, oder Monomere C3, vorzugsweise 2-Acrylamido-2-Methylpropansulfonsäure, einpolymerisiert. Darüber hinaus können die Copolymerisate in diesen Ausführungsformen zusätzlich 0,1 bis 0,5 Gew.-% Acrylamid einpolymerisiert enthalten. Darüber hinaus kann die 1. Zubereitung etwa 0,5 Gew.-% Methacryloylpropyltrimethoxysilan einpolymerisiert einhalten, und zwar bevorzugt dann, wenn die 1. Zubereitung keine ethylenisch ungesättigte Sulfonsäure einpolymerisiert enthält. Das Copolymerisat der 3. Zubereitung kann darüber hinaus etwa 1 Gew.-% (Meth)allyl(meth)acrylat einpolymerisiert enthalten.

Ferner ist es vorteilhaft, dass die Copolymerisate eine Glasübergangstemperatur von -25 bis +80 °C aufweisen. Hierbei ist zu beachten, dass eine hochwertige Beschichtung in der Regel nur dann erhalten wird, wenn die wässrigen Zubereitungen der filmbildenden Copolymere eine Mindestfilmbildetemperatur unterhalb der Anwendungstemperatur aufweisen. Die Mindestfilmbildetemperatur hängt nun ihrerseits von der Glasübergangstemperatur $T_G$ der Copolymerisate ab (siehe Ullmanns Encyclopedia of Industrial Chemistry, 5 ed, Vol. A 21, 1992, S. 169). Somit führt grundsätzlich eine niedrige Glasübergangstemperatur der Copolymerisate zu einer verbesserten Filmbildung. Andererseits hat eine niedrige Glasübergangstemperatur eine erhöhte Klebrigkeit der Beschichtung und damit eine erhöhte Anschmutzbarkeit der Beschichtung zur Folge. Ferner bedingt eine niedrige Glasübergangstemperatur in der Regel eine verschlechterte Blockfestigkeit. Im Allgemeinen lässt sich die Mindestfilmbildetemperatur dadurch beeinflussen, dass man der wässrigen Zubereitung sogenannte schwerflüchtige, äußere Weichmacher, z. B. Ester der Phthalsäure und/oder leichtflüchtige, niedrig siedende organische Lösungsmittel als Filmbildehilfsmittel zusetzt.

Es hat sich als vorteilhaft erwiesen, die erfindungsgemäß zur Anwendung kommenden Zubereitungen auf ihre konkreten Anwendungsziele durch Wahl einer geeigneten Glasübergangstemperatur für die Copolymerisate abzustimmen. So hat sich für die Beschichtung von Betonsteinen eine Glasübergangstemperatur $T_G$ für die Copolymerisate oberhalb -10 °C und insbesondere oberhalb +10 °C als vorteilhaft erwiesen. Vorzugsweise wird bei dieser Ausführungsform der Erfindung die Glasübergangstemperatur $T_G$ +50 °C nicht überschritten. Bei Faserzementplatten, die zum einen bei erhöhter Temperatur beschichtet werden können und die zum anderen eine hohe Blockfestigkeit aufweisen sollen, hat sich hingegen eine Glasübergangstemperatur oberhalb +20 °C und insbesondere oberhalb +30 °C als vorteilhaft erwiesen. Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur $T_G$ der Copolymerisate abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von schwach vernetzten Mischpolymerisaten bei großen Molmassen in guter Näherung

$$\frac{1}{T_G} = \frac{X^1}{T_G{}^1} + \frac{X^2}{T_G{}^2} + \cdots\cdot \frac{X^n}{T_G{}^n}$$

wobei $X^1, X^2, ..., X^n$ die Massenbrüche der Monomeren 1, 2, ..., n und $T_G{}^1, T_G{}^2, ..., T_G{}^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Die Herstellung der Copolymerisate kann durch alle Arten der radikalischen Copolymerisation ethylenisch ungesättigter Monomere, z. B. durch Lösungs-, Fällungs-, Substanz-, Emulsions- oder Suspensionspolymerisation, erfolgen. Bevorzugt werden die Copolymerisate mittels radikalischer, wässriger Emulsionspolymerisation in Gegenwart wenigstens eines radikalischen Polymerisationsinitiators und gegebenenfalls einer oder mehrerer grenzflächenaktiver Substanzen, durchgeführt. Vorzugsweise liegt das in Wasser dispergierbare Copolymerisat als Polymerteilchen mit mittleren Teilchengrößen im Bereich von 50 bis 1000 nm, insbesondere 50 bis 500 nm, besonders bevorzugt 60 bis 250 nm, vor. Verfahren zur Einstellung der Polymerteilchengröße sind beispielsweise aus der EP-A-126699, der EP-A-567 881, der EP-A-567 819, der DE-A-31 47 008 und der DE-A-42 13 967 bekannt.

Die wässrige Emulsionspolymerisation kann in üblicher Weise erfolgen, z. B. wie beispielsweise in der "Encyclopedia of Polymer Science and Technology", Vol. 5, Wiley & Sons Inc., NY 1966, S. 847) beschrieben. Auch in Wasser dispergierbare Copolymerisate in Form mehrphasiger Teilchen sind brauchbar. Ihre Herstellung kann z. B. durch sequentielle Verfahren, wie z. B. in der EP-555959, EP-308753 und EP-654454 beschrieben, erfolgen.

Als radikalische Polymerisationsinitiatoren kommen alle diejenigen in Betracht, die in der Lage sind, eine radikalische wässrige Emulsionspolymerisation auszulösen. Vorzugsweise beträgt die Menge der eingesetzten radikalischen Initiatorsysteme, bezogen auf die Gesamtmenge der zu polymerisierenden Monomeren, 0,05 bis 2 Gew.-%, vorzugsweise 0,1 bis 1 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein.

Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$).

Zu den anionischen grenzflächenaktiven Substanzen zählen auch die bereits vorstehend beschriebenen Verbindungen der Formel I.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden anionische Emulgatoren, insbesondere Emulgatoren der Formel I, oder Kombinationen aus wenigstens einem anionischen und einem nichtionischen Emulgator eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden.

Die Monomeren können sowohl als Monomermischung als auch als wässrige Monomeremulsion der Polymerisation zugeführt werden.

Polymerisationsdruck und Polymerisationstemperatur sind von untergeordneter Bedeutung. Im Allgemeinen

arbeitet man bei Temperaturen zwischen Raumtemperatur und 120 °C, vorzugsweise bei Temperaturen von 40 bis 110 °C und besonders bevorzugt zwischen 50 und 100 °C.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Geeignete Verfahren zur Desodorierung von Dispersionen sind dem Fachmann bekannt.

Auf diesem Wege sind Polymerisatdispersionen mit Polymergehalten bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Vorzugsweise werden die Polymerisatdispersionen mit Basen, insbesondere Alkalihydroxidlösungen, wie Natron- oder Kalilauge, oder Ammoniumhydroxid, neutralisiert, wobei ein pH-Wert im Bereich von 7 bis 8 besonders bevorzugt ist.

Die erfindungsgemäß zur Anwendung kommenden Zubereitungen liegen insbesondere in Form von Lösungen oder Dispersionen vor. Als Lösungs- bzw. Dispergiermedium werden bevorzugt wässrige Lösungsmittel, d. h. Wasser oder Mischungen aus Wasser und einem mit Wasser mischbaren organischen Lösungsmittel, z. B. einem $C_1$-$C_4$-Alkanol, wie Methanol, Ethanol, n- oder iso-Propanol, n-, iso-, 2-oder tert.-Butanol, Glykol, Propylenglykol, Butylenglykol, Glycerin, Diethylenglykol, Triethylenglykol, Tetrahydrofuran oder ähnliches verwendet.

Bevorzugt kommen die erfindungsgemäßen Copolymerisate in Form wässriger Zubereitungen, die nicht mehr als 50 Gew.-%, insbesondere nicht mehr als 20 Gew.-% und speziell nicht mehr als 10 Gew.-%, bezogen auf das Gesamtgewicht der Zubereitung, mit Wasser mischbare Lösungsmittel enthalten, zur Anwendung. Ganz besonders bevorzugt enthalten die erfindungsgemäßen Zubereitungen außer Wasser und abgesehen von üblichen Frostschutzmitteln und Filmbildehilfsmitteln keine organischen Lösungsmittel. In diesen Zubereitungen liegen die Copolymerisate in der Regel in Form wässriger Dispersionen vor.

Die Lösungen bzw. Dispersionen der Copolymerisate können erfindungsgemäß als solche verwendet werden. Die Zubereitungen enthalten jedoch in der Regel 0,1 bis 30 Gew.-% übliche Hilfsmittel. Ferner enthalten die wässrigen Zubereitungen, sofern die Herstellung der Copolymerisate durch radikalische, wässrige Emulsionspolymerisation erfolgt ist, auch die für diesen Zweck eingesetzten, grenzflächenaktiven Substanzen, wie Emulgatoren und/oder Schutzkolloide.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel.

Wenigstens die 2. Zubereitung enthält Füllstoffe und/oder anorganische Pigmente. Die Pigmentvolumenkonzentration (PVK) der 2. Zubereitung liegt vorzugsweise im Bereich von 20 bis 60 und insbesondere im Bereich von 25 bis 50. Auch die 1. Zubereitung kann Füllstoffe und/oder anorganische Pigmente enthalten, jedoch ist es vorteilhaft, dass die 1. Zubereitung eine um einen Wert von mindestens 10, vorzugsweise mindestens 20, kleinere Pigmentvolumenkonzentration als die gefüllte und/oder pigmentierte 2. Zubereitung aufweist. In einer bevorzugten Ausführungsform weist die 1. Zubereitung eine Pigmentvolumenkonzentration im Bereich von 0,5 bis 10 auf, in einer besonders bevorzugten Ausführungsform ist die 1. Zubereitung unpigmentiert und ungefüllt. Die 3. Zubereitung weist vorzugsweise eine Pigmentvolumenkonzentration von höchstens 45 und insbesondere von höchstens 35 auf.

In einer bevorzugten Ausführungsform ist die Pigmentvolumenkonzentration der 3. Zubereitung um wenigstens 10 kleiner als die der zuvor aufgebrachten 2. Zubereitung.

In weiteren bevorzugten Ausführungsformen ist die 3. Zubereitung im Wesentlichen ungefüllt und unpigmentiert oder weist eine Pigmentvolumenkonzentration im Bereich von 0,5 bis 30, wie z. B. etwa 5, etwa 15 oder etwa 25, auf.

In einer besonders bevorzugten Ausführungsform ist die 1. Zubereitung im Wesentlichen unpigmentiert/ungefüllt, die 2. Zubereitung pigmentiert/gefüllt mit einer Pigmentvolumenkonzentration im Bereich von 20 bis 50, vorzugsweise 25 bis 45, und die 3. Zubereitung im Wesentlichen ungefüllt/unpigmentiert oder weist eine Pigmentvolumenkonzentration im Bereich 1 bis 45, vorzugsweise 5 bis 30, auf.

Typische Füllstoffe umfassen Alumosilicate, z. B. Feldspäte, Silicate, z. B. Kaolin, Talkum, Glimmer, Magnesit, Erdalkalicarbonate, z. B. Calciumcarbonat, beispielsweise in Form von Calcit oder Kreide, Magnesiumcarbonat, Dolomit, Erdalkalisulfate, z. B. Calciumsulfat, Siliciumdioxid etc. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken können die Zubereitungen auch farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten.

In den wässrigen Zubereitungen liegt der Gesamtgehalt an Copolymerisat im Bereich von 10 bis 70 Gew.-%, vorzugsweise im Bereich von 20 bis 60 Gew.-%, der Gehalt an Hilfsmitteln im Bereich von 0,1 bis 30 Gew.-% und vorzugsweise im Bereich von 0,5 bis 10 Gew.-%. Die Menge an Pigmenten und/oder Füllstoffen liegt in der 2. Zubereitung im Allgemeinen zwischen 50 und 450 Gewichtsteilen, bezogen auf 100 Gewichtsteile Copolymerisat in der

wässrigen 2. Zubereitung. Ferner werden pigmenthaltige Zubereitungen neben den Filmbildehilfsmitteln und den Entschäumern vorzugsweise auch ein Dispergier- bzw. Netzmittel enthalten.

Das erfindungsgemäße Verfahren umfasst die Beschichtung mineralischer Formkörper mit den zuvor beschriebenen filmbildenden, wässrigen Zubereitungen, wobei man nacheinander wenigstens eine erste, wie zuvor beschriebene 1. Zubereitung, enthaltend wenigstens ein Copolymerisat als Bindemittel, auf den mineralischen Formkörper aufbringt, gegebenenfalls trocknet, anschließend wenigstens eine zweite, wie zuvor beschriebene 2. Zubereitung, enthaltend wenigstens ein Copolymerisat als Bindemittel und wenigstens ein anorganisches Pigment, auf die bereits beschichtete Oberfläche des mineralischen Formkörpers aufbringt und anschließend trocknet. In der Regel wird die Summe der aufzutragenden Menge der wässrigen Zubereitungen im Bereich von 30 bis 800 $g/m^2$ (nass gerechnet), entsprechend einem getrockneten Auftrag von 15 bis 500 $g/m^2$ und insbesondere einem trockenen Auftrag von 25 bis 300 $g/m^2$ betragen, wobei der Erstauftrag mit der 1. Zubereitung vorzugsweise 10 bis 60 Gew.-%, insbesondere 15 bis 50 Gew.-% der Summe der aufzutragenden Mengen entspricht. Der Zweitauftrag mit der 2. Zubereitung beträgt vorzugsweise 20 bis 70 Gew.-% und insbesondere 30 bis 70 Gew.-% der Summe der aufzutragenden Mengen. Der Drittauftrag mit der 3. Zubereitung beträgt vorzugsweise 10 bis 60 Gew.-% und insbesondere 20 bis 40 Gew.-%. Jeder der Aufträge, der Erst-, Zweit- und Drittauftrag, kann jeweils sowohl in einem Beschichtungsvorgang durch Auftragen der gesamten Menge der jeweiligen Zubereitung als auch durch mehrmaliges Auftragen, wie beispielsweise durch zwei-, drei- oder viermaliges Auftragen, von Teilmengen der gesamten Menge der jeweiligen Zubereitung erfolgen. Der Auftrag der Zubereitungen kann in an sich bekannter Weise durch Spritzen, Spachteln, Rakeln, Rollen oder Gießen erfolgen. Die sich dem Aufbringen der Zubereitungen gegebenenfalls anschließenden Trocknungsvorgänge können sowohl bei Raumtemperatur als auch bei erhöhter Temperatur, beispielsweise im Bereich von 40 bis 100 °C, erfolgen. Der Trocknungsschritt nach dem Aufbringen der 3. Zubereitung erfolgt in der Regel bei erhöhter Temperatur, vorzugsweise im Bereich von 40 bis 120 °C.

Das erfindungsgemäße Verfahren ist im Allgemeinen auf alle Formkörper anwendbar, die ein mineralisches Bindemittel enthalten. Seine bevorzugten Wirkungen entfaltet es bei mineralischen Formkörpern, die Zement als Bindemittel enthalten (Betonsteine und Faserzementplatten). Unter Betonsteinen versteht man geformte Gebilde aus Beton und/oder Gasbeton, z. B. Platten, Rohre und/oder Dachziegel (Betondachsteine). Der Betonstein wird in üblicher Weise aus fertig gemischtem Beton durch ein Strangpressverfahren in bekannter Weise hergestellt. Die erfindungsgemäßen wässrigen Zubereitungen, insbesondere die 1. Zubereitung, bieten nunmehr den Vorteil, dass sie nicht nur auf den fertig abgebundenen, sondern auch auf den frisch zubereiteten, nicht abgebundenen, sogenannten "grünen" Betonstein aufgebracht werden können. Das Aufbringen einer 1. Zubereitung auf einen frisch zubereiteten, mineralischen Formkörper stellt eine bevorzugte Ausführungsform des erfindungsgemäßen Verfahrens dar. Das Trocknen der erfindungsgemäß beschichteten, "grünen" Betonsteine kann in üblicher Weise, gegebenenfalls bei Raumtemperatur oder erhöhter Temperatur durchgeführt werden. Vorzugsweise wird der beschichtete "grüne" Betonstein in eine sog. Kammer eingebracht. Dort wird in einem etwa 6 bis 24 Stunden dauernden Abbindeprozess bei Temperaturen im Bereich von 40 bis 70 °C der Beton abgebunden und das Copolymerisat der 1. Zubereitung verfilmt. Nach diesem Prozess wird der Stein wenigstens einmal mit der erfindungsgemäßen wässrigen 2. Zubereitung besprüht und der vorbeschriebene Trocknungsschritt wiederholt. Anschließend wird der Stein wenigstens einmal mit der 3. Zubereitung besprüht. Eine weitere Trocknung erfolgt anschließend in einem Tunnelofen bei etwa 80 bis 120 °C liegenden Umlufttemperaturen.

Bereits abgebundene mineralische Formkörper können auch bei üblichen Umgebungstemperaturen, z. B. Raumtemperatur, mit den erfindungsgemäßen Zubereitungen beschichtet werden.

Die vorteilhaften Eigenschaften der erfindungsgemäßen, wässrigen Zubereitungen kommen insbesondere bei mineralischen Formkörpern zum Tragen, die mit einer mineralischen Beschichtungsmasse, bevorzugt einem Zementslurry, beschichtet sind. Zementslurry sind im Rahmen dieser Erfindung mineralische Beschichtungsmassen, die ein mineralisches Bindemittel, insbesondere Zement, enthalten. Als Zuschläge und/oder Füllstoffe enthalten geeignete Zementslurry Feinsand, Zement, Wasser und gegebenenfalls Pigmente, insbesondere Feinsand, Zement und Wasser. Vorteilhaft weisen feste Zuschläge und/oder Füllstoffe Korngrößen im Bereich von 0,01 bis 5 mm, insbesondere im Bereich von 0,05 bis 4 mm auf. Für mineralische Formkörper mit besonders glatten Oberflächen setzt man vorzugsweise Zementslurry ein, die Feinsand mit Korngrößen kleiner als 2 mm und/oder einen hohen Anteil an Zement aufweisen. Ein hoher Zementanteil führt, ebenso wie Feinsand mit geringer Korngröße, zu Slurry, die besonders glatte Oberflächen ermöglichen, da der Zement in der Regel eine sehr geringe Korngröße aufweist.

Mineralische Formkörper, die wenigstens eine mit einem Zementslurry versehene Oberfläche aufweisen, können auf verschiedene Weisen hergestellt werden.

Beispielsweise kann die Herstellung durch Beschichten wenigstens einer Oberfläche eines mineralischen Formkörpers mit einem Zementslurry erfolgen, wobei das Aufbringen des Slurry z. B. durch Gießen, Rakeln, Tauchen, Streichen, Spritzen u. ä. erfolgen kann. Alternativ kann die Herstellung von mineralischen Formkörpern, die wenigstens eine mit einem Zementslurry versehene Oberfläche aufweisen, durch Coextrusion der dem mineralischen Formkörper zugrunde liegenden Masse und des Zementslurry erfolgen.

Vorzugsweise werden Zementslurry auf der oder den Sichtflächen mineralischer Körper aufgebracht, z. B. durch die vorstehend beschriebenen Verfahren.

Mit solchen Zementslurry versehene mineralische Formkörper weisen eine gewünschte, sehr glatte Oberfläche auf, auf der konventionelle Beschichtungen, auch mehrschichtige konventionelle Beschichtungen, auf Basis von Polymerdispersionen nur sehr schlecht haften und/oder nicht die gewünschten Oberflächeneigenschaften, wie z. B. Glanz und Witterungsbeständigkeit, zeigen. Demgegenüber zeigen die mit dem erfindungsgemäßen Verfahren hergestellten mineralischen Formkörper eine deutlich verbeserte Haftung, insbesondere bei mineralischen Formkörpern mit besonders glatten Oberflächen. Der Auftrag der erfindungsgemäßen, wässrigen Zubereitungen kann in der oben beschriebenen Weise erfolgen.

Ferner erweisen sich die vorteilhaften Eigenschaften der erfindungsgemäßen, wässrigen Zubereitungen ähnlich vorteilhaft bei sog. Faserzementplatten, d. h. flächigen, mineralischen Formkörpern, die Zement als Bindemittel enthalten und die mineralische oder organische Fasern, z. B. Polyester- und/oder Polyamidfasern als Zuschläge enthalten. Der Auftrag der erfindungsgemäßen, wässrigen Zubereitungen erfolgt in der Regel in der für "grüne" Betonsteine beschriebenen Weise.

Die nach dem erfindungsgemäßen Verfahren beschichteten mineralischen Formkörper zeichnen sich einerseits durch guten Schutz vor Ausblühungen und guter Beständigkeit, auch unter Bewitterungsbedingungen aus, die sich z. B. in geringer Wasseraufnahme, hoher Rutschfestigkeit, geringen Alterungserscheinungen äußert. Insbesondere ist auch auf besonders glatten mineralischen Oberflächen die Haftung deutlich verbessert und die Blasenbildungsneigung deutlich reduziert. Es lassen sich einfach die gewünschten Oberflächeneigenschaften einstellen, z. B. einen gewünschten Glanzgrad zwischen matt und hochglänzend, und hohe Blockfestigkeit. Diese Eigenschaften sind insbesondere für Betondachsteine von Bedeutung, die daher eine bevorzugte Ausführungsform der Erfindung darstellen. Zudem ist das erfindungsgemäße Verfahren aufgrund der vergleichsweise niedrigen Konzentration an als Bindemittel eingesetzten Copolymerisaten ökonomisch vorteilhaft. Demnach führt das erfindungsgemäße Verfahren zu verbesserter Konservierung und verbesserten Eigenschaften von mineralischen Formkörpern.

Die derart beschichteten mineralischen Formkörper sind neu und ebenfalls Gegenstand der vorliegenden Erfindung.

Weiterer Gegenstand der Erfindung ist ein Mittel zur Beschichtung mineralischer Formkörper, bestehend aus drei voneinander getrennten Zubereitungen, die aus den Monomeren A, B und gegebenenfalls C aufgebaute Copolymerisate in dispers verteilter Form als filmbildende Bestandteile enthalten, wobei

- die Monomere A ausgewählt sind unter Vinylaromaten und Methacrylsäureestern von $C_1$-$C_4$-Alkanolen,
- die Monomere B ausgewählt sind unter Methacrylsäureestern von $C_5$-$C_{12}$-Alkanolen, Acrylsäureestern von $C_1$-$C_{12}$-Alkanolen und Vinylestern aliphatischer Carbonsäuren und
- die Monomere C davon verschiedene ethylenisch ungesättigte Monomere umfassen,

wobei die 1. Zubereitung eine Pigmentvolumenkonzentration von weniger als 20, die 2. Zubereitung eine Pigmentvolumenkonzentration von 10 bis 70 und die 3. Zubereitung eine PVK von weniger als 50 aufweist, wobei die Pigmentvolumenkonzentration der 1. Zubereitung um einen Wert von mindestens 10 kleiner ist als die der 2. Zubereitung.

Die erfindungsgemäßen Mittel umfassen drei separate Komponenten (1., 2. und 3. Zubereitungen), die gemeinsam oder in getrennten Verpackungseinheiten vorliegen können.

Die im Folgenden angegebenen Beispiele sollen die vorliegende Erfindung verdeutlichen.

Beispiele

I. Herstellung der filmbildenden Copolymerisate P1 bzw. P2 in Form wässriger Dispersionen (Dispersion D1 und Dispersion D2)

a) Dispersion D1

In einem Polymerisationsgefäß legte man 471,0 gentionisiertes Wasser, 14,0 g einer wässrigen 50 gew.-%igen Lösung von AMPS (2-Acrylamido-2-methyl-propansulfonsäure), 7,0 g Emulgatorlösung 1 und 6,0 g Emulgatorlösung 2 vor und erwärmt auf 85 °C.

In einem Zulaufgefäß 1 stellte man eine Emulsion aus

| | |
|---|---|
| 486,0 g | entionisiertem Wasser |

(fortgesetzt)

| | |
|---|---|
| 29,0 g | Emulgatorlösung 1 |
| 13,0 g | Emulgatorlösung 2 |
| 675,0 g | Methylmethacrylat |
| 575,0 g | n-Butylacrylat |
| 13,0 g | Methacrylsäure |
| 13,0 g | 50 gew.-%ige Lösung von Acrylamid in Wasser |

her.

In einem zweiten Zulaufgefäß 2 stellte man eine Lösung von 5,0 g Natriumperoxodisulfat in 190 g Wasser her.

Anschließend gab man unter Beibehaltung der 85 °C nacheinander in einer Portion 80,0 g von Zulauf 1 und 12,0 g von Zulauf 2 in die Vorlage und ließ 15 min bei 80 °C reagieren.

Anschließend gab man über räumlich getrennte Zuläufe, zeitgleich beginnend, kontinuierlich die Restmengen von Zulauf 1 und Zulauf 2 innerhalb 3 h unter Beibehaltung der 85 °C in das Polymerisationsgefäß. Nach Beendigung des Zulaufes ließ man 1 h nachpolymerisieren, kühlte auf 25 °C ab und neutralisierte mit Natronlauge (pH ≈ 8).

Der Feststoffgehalt der erhaltenen Dispersion lag bei etwa 52,6 Gew.-%. Die Glasübergangstemperatur $T_G$ des erhaltenen Copolymerisates beträgt 29 °C, bestimmt mittels DSC nach DIN 53765.

Emulgatorlösung 1: 35 gew.-%ige wässrige Lösung eines Schwefelsäurehalbesters eines ethoxylierten Nonylphenols (E0-Grad 25).

Emulgatorlösung 2: 20 gew.-%ige wässrige Lösung eines ethoxylierten $C_{13}/C_{15}$-Oxoalkoholgemischs (gesättigt) mit einem E0-Grad von 30.

b) Dispersion D2

In einem Polymerisationsgefäß legte man 573 g entionisiertes Wasser, 15,0 g einer 50 gew.-%igen Lösung des Ammoniumsalzes der AMPS (2-Acylamido-2-methylpropansulfonsäure) in Wasser und 10,0 g Emulgatorlösung 3 vor und erwärmt auf 85 °C.

In einem Zulaufgefäß 1 stellte man eine Emulsion aus

| | |
|---|---|
| 594,0 g | entionisiertem Wasser |
| 57,0 g | Emulgatorlösung 3 |
| 780,0 g | Methylmethacrylat |
| 720,0 g | n-Butylacrylat |
| 15,0 g | 50 gew.-%ige Lösung des Ammoniumsalzes der AMPS (2-Acrylamido-2-methylpropansulfonsäure) in Wasser |
| 9,0 g | 50 gew.-%ige Lösung von Acrylamid in Wasser |

her.

In einem zweiten Zulaufgefäß 2 stellte man eine Lösung von 8,0 g Natriumperoxodisulfat in 300 g Wasser her.

Anschließend gab man unter Beibehaltung der 85 °C nacheinander in einer Portion 80,0 g von Zulauf 1 und 12,0 g von Zulauf 2 in die Vorlage und ließ 15 min reagieren.

Anschließend gab man über räumlich getrennte Zuläufe, zeitgleich beginnend, die Restmengen von Zulauf 1 und Zulauf 2 innerhalb von 3,0 h unter Beibehaltung der 85 °C in das Polymerisationsgefäß. Nach Beendigung des Zulaufes ließ man 1 h nachpolymerisieren, kühlte auf 25 °C ab und neutralisierte mit 25 %iger wässriger Ammioniaklösung (pH ≈ 8).

Der Feststoffgehalt der erhaltenen Dispersion lag bei etwa 50,3 Gew.-%. Die Glasübergangstemperatur $T_G$ des erhaltenen Copolymerisates beträgt 21 °C, bestimmt mittels DSC nach DIN 53765.

Emulgatorlösung 3: 45 gew.-%ige wässrige Lösung einer als Dowfax® 2A1 (Dow Chemical) im Handel üblichen Wirksubstanz (Gemisch von Monound Di-$C_1$-$C_{12}$-alkyl-Verbindung der allgemeinen Formel I als Natriumsalz).

c) Dispersion D3

In einem Polymerisationsgefäß wurde eine wässrige Emulsion aus

| | |
|---|---|
| 105,0 g | entionisiertes Wasser |
| 54,0 g | Styrol |
| 44,0 g | n-Butylacrylat |
| 2,0 g | Acrylsäure |
| 0,5 g | γ-Methacryloxypropyltrimethoxysilan |
| 0,5 g | Natriumlaurylsulfat |
| 0,5 g | Natriumperoxodisulfat |

bei 90 °C nach der Emulsionszulauffahrweise nach der Methode der radikalischen, wässrigen Emulsionspolymerisation polymerisiert.

Der Feststoffgehalt der erhaltenen Dispersion lag bei etwa 50 Gew.-%. Die Glasübergangstemperatur $T_G$ des erhaltenen Copolymerisats beträgt +30 °C, bestimmt mittels DSC nach DIN 53765.

d) Dispersion D4

In einem Polymerisationsgefäß legte man 700,0 g entionisiertes Wasser und 43,3 g Emulgatorlösung 3 vor und erwärmt auf 95 °C.

In einem Zulaufgefäß 1 stellte man eine Emulsion aus:

| | |
|---|---|
| 602,5 g | entionisiertem Wasser |
| 11,6 g | Emulgatorlösung 4 |
| 546,0 g | n-Butylacrylat |
| 754,0 g | Methylmethacrylat |
| 19,5 g | Acrylsäure |
| 23,4 g | 20 gew.-%ige Lösung von Acrylamid in Wasser |
| 13,0 g | Methacrylsäureallylester her. |

In einem zweiten Zulaufgefäß 2 stellte man eine Lösung von 3,9 g Natriumpersulfat in 200,0 g Wasser her. Dann gab man unter Beibehaltung der 95 °C nacheinander in einer Portion 100 g von Zulauf 1 und 20,4 g von Zulauf 2 in die Vorlage und ließ 12 min reagieren. Anschließend gab man über räumlich getrennte Zuläufe, zeitgleich beginnend, die Restmengen von Zulauf 1 und Zulauf 2 innerhalb von 3 h unter Beibehaltung der 95 °C in das Polymerisationsgefäß. Nach Beendigung Zuläufe ließ man 30 min nachpolymerisieren, kühlte auf 25 °C ab und neutralisierte mit Natronlauge (ph ≈ 7,5).

Der Feststoffgehalt der erhaltenen Dispersion lag bei 45 Gew.-%. Die mittels DSC ermittelte Glasübergangstemperatur lag bei 38 °C.

Emulgatorlösung 4: 15 gew.-%ige wässrige Lösung des Natriumsalzes eines $C_{12}$-Alkylsulfats

II. Bestimmung der anwendungstechnischen Eigenschaften

1. Herstellung der 1., 2. und 3. Zubereitungen der Dispersionen D1 bis D4:

   Je 100 g der Dispersionen D1 bis D4 wurden mit 0,5 g eines Entschäumers (Tego Foamex@825 der Th. Goldschmidt AG) und 0,5 g eines technischen Gemisches der Di-n-butylester der Bernstein-, Glutar- und Adipinsäure versetzt. Die so erhaltenen Dispersionsfarben D1 und D3 mit PVK = 0 wurden direkt als 1. Zubereitungen eingesetzt; die so erhaltene Dispersionsfarbe D4 mit PVK = 0 wurde direkt als 3. Zubereitung eingesetzt (siehe Tabelle).

   Aus den so konfektionierten Dispersionen D2 bzw. D3 wurden Dispersionsfarben mit Pigmentvolumenkonzentrationen (PVK) von 27 und 44 formuliert. Zur Herstellung von Dispersionsfarben mit Pigmentvolumenkonzentration = 27 suspendierte man 253,0 g eines handelsüblichen Füllstoffs (Calciumcarbonat/Calciumsilikat) und 38,8 g Eisenoxid-Rotpigment der BAYER AG in 112,0 g Wasser. Hierzu gab man unter Rühren 598,0 g der konfektionierten Dispersion D2 bzw. D3. Die so erhaltenen Farben ließ man vor ihrer anwendungstechnischen Prüfung 48 h bei Raumtemperatur reifen.

Analog zu der zuvor beschriebenen Vorgehensweise stellte man aus den konfektionierten Dispersionen D2 und D3 weitere Farben mit einer PVK von 44 her.

| | PVK 44 | PVK 44 |
|---|---|---|
| Dispersion | 392,4 g D2 | 392,4 g D3 |
| Wasser | 173,6 g | 173,6 g |
| Pigment | 86,8 g | 86,8 g |
| Füllstoff | 347,2 g | 347,2 g |

2. Beschichten des mineralischen Formkörpers: Bei den erfindungsgemäßen Beispielen B1 bis B25 wurde jeweils eine der unter II.1 beschriebenen 1. Zubereitungen mittels einer Spritzpistole auf einen "grünen" Betonstein*) aufgebracht (sog. Nassauftrag). Anschließend trocknet man 2 h bei 40 °C und 75% rel. Luftfeuchte und dann 4 h bei 40 °C und 95% rel. Luftfeuchte. Danach brachte man in der gleichen Weise eine der unter II.1 beschriebenen 2. Zubereitungen auf (sog. Trockenauftrag) und trocknete anschließend 2 h bei 40 °C und 75 % rel. Luftfeuchte und dann 4 h bei 95 % rel. Luftfeuchte. Zuletzt brachte man eine der unter II.1 beschriebenen 3. Zubereitungen in gleicher Weise auf (sog. Trockenauftrag) und trocknete 8 h bei 40 °C und 50% rel. Luftfeuchte . Bei den Vergleichsbeispielen VB1 bis VB6 wurde dagegen keine 1. Zubereitung aufgebracht, sondern direkt die 2. Zubereitungen mit einer Pigmentvolumenkonzentration von 27 bzw. 44. Die Zubereitungen wurden in den in Tabelle 1 angegebenen Mengen auf die Betonsteine aufgebracht.

Die den Zubereitungen zugrunde liegenden Dispersionen und Pigmentvolumenkonzentrationen sind in der Tabelle zusammengefasst.

III.Anwendungstechnische Prüfung

1. Bestimmung des Ausblühschutzes

Nach der Trocknung legte man den Stein 7 d mit der Oberfläche auf ein 60 °C warmes Wasserbad. Der Grad der Ausblühungen wurde visuell beurteilt. Hierfür wird folgende Notenskala zugrunde gelegt. Die Ergebnisse sind in Tabelle 1 zusammengefasst.

0 = keine Ausblühungen
1 = fast keine Ausblühungen
2 = leichte Ausblühungen
3 = mäßige Ausblühungen
4 = starke Ausblühungen
5 = sehr starke Ausblühungen

2. Bestimmung des Glanzes

Die Teststeine, die bereits nach 1. zur Beurteilung der Ausblühsicherheit herangezogen wurden, werden auch zur Beurteilung des Glanzes verwendet. Dabei wird der Glanz visuell an sogenannten belasteten Stellen, d. h. in Bereichen, in denen der Wasserdampf mit der Beschichtung in direktem Kontakt stand, beurteilt. Die Ergebnisse sind in Tabelle 1 zusammengefasst. Hierfür wird folgende Notenskala zugrunde gelegt:

0 = sehr hoher Glanz
1 = hoher Glanz
2 = höherer Glanz
3 = geringer Glanz
4 = weniger matt
5 = matt, stumpf

*) Als "grüner" Betonstein diente ein Flachstein mit den Abmessungen 30 x 20 x 1,8 cm, der durch Extrusion eines Mörtels aus Sand (Korngröße bis 0,3 mm) und Zement (Gewichtsverhältnis Sand/Zement 4:1) sowie Wasser (Wasser/Zement-Gewichtsverhältnis 1:2,5) hergestellt wurde. Der Flachstein hat in der Mitte eine Wölbung, die in ihrem Scheitelpunkt ca. 4 cm von der Grundfläche abgehoben ist.

3. Bestimmung der Blasenbildungsneigung

Die Teststeine, die bereits nach 1. und 2. beurteilt sind, werden auch für die Bestimmung der Blasenbildungsneigung verwendet. Dabei wird die Bildung von Blasen visuell an sogenannten belasteten Stellen (s.o.) beurteilt.

Die Ergebnisse sind in der Tabelle 1 zusammengefasst. Hierfür wird folgende Notenskala zugrunde gelegt:

0 = nicht vorhanden
1 = schwach erkennbar
2 = gut erkennbar
3 = auffallend
4 = stark auffallend
5 = sehr stark auffallend

4. Bestimmung der Haftung

Die Teststeine, die bereits nach 1. bis 3. beurteilt sind, werden auch für die Bestimmung der Haftung verwendet. Die Haftung wird mittels eines TESA-Bandes an sogenannten belasteten Stellen (s. o.) bestimmt. Dazu wird ein ca. 10 cm langer, ca. 3 cm breiter Streifen des TESA-Bandes mit einer Gummirolle unter leichtem Andrücken auf die Oberfläche des Steins aufgebracht. Nach einigen Minuten wird der Klebestreifen durch kurzes Reißen abgeschält. Die am Klebeband eventuell haftenden Bestandteile und ihre Menge dient zur Beurteilung. Die Ergebnisse sind in der Tabelle 1 zusammengefasst. Hierfür wird folgende Notenskala zugrunde gelegt.

0 = nicht vorhanden
1 = schwach erkennbar
2 = gut erkennbar
3 = auffallend
4 = stark auffallend
5 = sehr stark auffallend

5. Testversuche

Es werden im Folgenden 25 erfindungsgemäße Beispiele und 6 Vergleichsbeispiele bewertet (siehe Tabelle 1). Die Vergleichsbeispiele VB1 bis VB6 unterscheiden sich von den erfindungsgemäßen Beispielen dadurch, dass zum einen nur 2 Zubereitungen aufgebracht werden und zum anderen die zuerst aufgebrachte Zubereitung keine um eine Differenz von wenigstens 10 kleinere Pigmentvolumenkonzentration aufweist.

Tabelle 1:

| | 1. Zubereitung | | | 2. Zubereitung | | | 3. Zubereitung | | | Ausblühen | Glanz | Blasenbildung | Haftung |
|---|---|---|---|---|---|---|---|---|---|---|---|---|---|
| | Dispersion | PVK | Menge[1] ($g/m^2$) | Dispersion | PVK | Menge[1] ($g/m^2$) | Dispersion | PVK | Menge[1] ($g/m^2$) | | | | |
| VB1 | - | - | - | D2 | 27 | 17 | D2 | 27 | 9 | 2 | 2 | 1 | 2 |
| VB2 | - | - | - | D3 | 27 | 17 | D2 | 27 | 9 | 2 | 2 | 1 | 2 |
| VB3 | - | - | - | D2 | 44 | 17 | D3 | 27 | 9 | 2 | 2 | 1 | 2 |
| VB4 | - | - | - | D3 | 44 | 17 | D3 | 44 | 9 | 2 | 4 | 1 | 2 |
| VB5 | - | - | - | D2 | 44 | 17 | D2 | 44 | 9 | 4 | 4 | 1 | 2 |
| VB6 | - | - | - | D2 | 27 | 17 | D4 | 0 | 9 | 2 | 1 | 1 | 2 |
| B1 | D1 | 0 | 6 | D2 | 27 | 17 | D2 | 27 | 9 | 1 | 2 | 1 | 0 |
| B2 | D3 | 0 | 6 | D2 | 27 | 17 | D2 | 27 | 9 | 1 | 2 | 1 | 0 |
| B3 | D1 | 0 | 6 | D3 | 27 | 17 | D2 | 27 | 9 | 1 | 2 | 1 | 0 |
| B4 | D3 | 0 | 6 | D3 | 27 | 17 | D2 | 27 | 9 | 1 | 2 | 1 | 0 |
| B5 | D1 | 0 | 6 | D2 | 27 | 17 | D3 | 27 | 9 | 1 | 3 | 1 | 0 |
| B6 | D3 | 0 | 6 | D2 | 27 | 17 | D3 | 27 | 9 | 1 | 3 | 1 | 0 |
| B7 | D1 | 0 | 6 | D3 | 27 | 17 | D3 | 27 | 9 | 1 | 3 | 1 | 0 |
| B8 | D3 | 0 | 6 | D3 | 27 | 17 | D3 | 27 | 9 | 1 | 3 | 1 | 0 |

1) Auf die Oberseite der Betondachsteine aufgetragene Menge der Zubereitung, gerechnet als getrockneter Auftrag

| | 1. Zubereitung | | | 2. Zubereitung | | | 3. Zubereitung | | | Ausblühen | Glanz | Blasenbildung | Haftung |
|---|---|---|---|---|---|---|---|---|---|---|---|---|---|
| | Dispersion | PVK | Menge[1)] ($g/m^2$) | Dispersion | PVK | Menge[1)] ($g/m^2$) | Dispersion | PVK | Menge[1)] ($g/m^2$) | | | | |
| B9 | D1 | 0 | 6 | D2 | 44 | 17 | D2 | 44 | 9 | 1 | 4 | 1 | 0 |
| B10 | D3 | 0 | 6 | D2 | 44 | 17 | D2 | 44 | 9 | 1 | 4 | 1 | 0 |
| B12 | D1 | 0 | 6 | D3 | 44 | 17 | D2 | 44 | 9 | 1 | 4 | 1 | 0 |
| B13 | D3 | 0 | 6 | D3 | 44 | 17 | D2 | 44 | 9 | 1 | 4 | 1 | 0 |
| B14 | D1 | 0 | 6 | D2 | 44 | 17 | D3 | 44 | 9 | 1 | 4 | 1 | 0 |
| B15 | D3 | 0 | 6 | D2 | 44 | 17 | D3 | 44 | 9 | 1 | 4 | 1 | 0 |
| B16 | D1 | 0 | 6 | D3 | 44 | 17 | D3 | 44 | 9 | 1 | 4 | 1 | 0 |
| B17 | D3 | 0 | 6 | D3 | 44 | 17 | D3 | 44 | 9 | 1 | 4 | 1 | 0 |
| B18 | D1 | 0 | 6 | D2 | 27 | 17 | D4 | 0 | 9 | 1 | 1 | 1 | 0 |
| B19 | D3 | 0 | 6 | D2 | 27 | 17 | D4 | 0 | 9 | 1 | 1 | 1 | 0 |
| B20 | D1 | 0 | 6 | D3 | 27 | 17 | D4 | 0 | 9 | 1 | 1 | 1 | 0 |
| B21 | D3 | 0 | 6 | D3 | 27 | 17 | D4 | 0 | 9 | 1 | 1 | 1 | 0 |
| B22 | D1 | 0 | 6 | D2 | 27 | 17 | D4 | 0 | 9 | 1 | 1 | 1 | 0 |
| B23 | D3 | 0 | 6 | D2 | 27 | 17 | D4 | 0 | 9 | 1 | 1 | 1 | 0 |
| B24 | D1 | 0 | 6 | D3 | 27 | 17 | D4 | 0 | 9 | 1 | 1 | 1 | 0 |
| B25 | D3 | 0 | 6 | D3 | 27 | 17 | D4 | 0 | 9 | 1 | 1 | 1 | 0 |

1) Auf die Oberseite der Betondachsteine aufgetragene Menge der Zubereitung, gerechnet als getrockneter Auftrag

**Patentansprüche**

1. Verfahren zum Beschichten mineralischer Formkörper mit wässrigen Zubereitungen, die aus den Monomeren A, B und gegebenenfalls C aufgebaute Copolymerisate in dispers verteilter Form als filmbildende Bestandteile enthalten, wobei

   - die Monomere A ausgewählt sind unter Vinylaromaten und Methacrylsäureestern von $C_1$-$C_4$-Alkanolen,
   - die Monomere B ausgewählt sind unter Methacrylsäureestern von $C_5$-$C_{12}$-Alkanolen, Acrylsäureestern von $C_1$-$C_{12}$-Alkanolen und Vinylestern aliphatischer Carbonsäuren und
   - die Monomere C ethylenisch ungesättigte Monomere umfassen, die von den Monomeren A und B verschieden sind,

   wobei man auf den mineralischen Formkörper nacheinander eine erste Zubereitung mit einer Pigmentvolumenkonzentration von weniger als 20 aufbringt, gegebenenfalls trocknet, eine zweite Zubereitung mit einer Pigmentvolumenkonzentration von 10 bis 70 aufbringt, gegebenenfalls trocknet, und eine dritte Zubereitung mit einer PVK von weniger als 50 aufbringt, wobei die Pigmentvolumenkonzentration der ersten Zubereitung um einen Wert von mindestens 10 kleiner ist als die der zweiten Zubereitung.

2. Verfahren nach Anspruch 1, wobei man wenigstens für die erste Zubereitung ein Copolymer einsetzt, das als Monomer C wenigstens eine ethylenisch ungesättigte Sulfonsäure und/oder ein ethylenisch ungesättigtes Silan einpolymerisiert enthält.

3. Verfahren nach Anspruch 1 oder 2, wobei man eine erste Zubereitung einsetzt, die 0,5 bis 10 Gew.-%, bezogen auf das Copolymer, einer Verbindung der Formel I

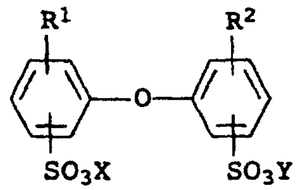 (I)

   enthält, worin $R^1$ oder $R^2$ Wasserstoff oder $C_4$-$C_{24}$-Alkyl bedeuten und nicht gleichzeitig Wasserstoff sind, und X und Y für Alkalimetallionen und/oder Ammoniumionen stehen.

4. Verfahren nach einem der vorhergehenden Ansprüche, wobei die Copolymerisate wenigstens 80 Gew.-% einpolymerisierte Monomere A und B enthalten.

5. Verfahren nach einem der vorhergehenden Ansprüche, wobei man für die Copolymerisate wenigstens zweier Zubereitungen gleiche Monomere A und/oder gleiche Monomere B auswählt.

6. Verfahren nach einem der vorhergehenden Ansprüche, wobei sich in den Copolymerisaten zweier nacheinander aufgetragener Zubereitungen die Mengenverhältnisse der Monomeren A zu B um weniger als 30% unterscheiden.

7. Verfahren nach einem der vorhergehenden Ansprüche, wobei man wenigstens für die erste und die zweite Zubereitung gleiche Copolymerisate einsetzt.

8. Verfahren nach einem der vorhergehenden Ansprüche, wobei man eine erste Zubereitung mit einer Pigmentvolumenkonzentration im Bereich von 0 bis 10, eine zweite Zubereitung mit einer Pigmentvolumenkonzentration im Bereich von 20 bis 50 und eine dritte Zubereitung mit einer Pigmentvolumenkonzentration im Bereich von 0 bis 45 einsetzt.

9. Verfahren nach einem der vorhergehenden Ansprüche, wobei die Monomere A ausgewählt sind unter Methylmethacrylat und Styrol und die Monomere B ausgewählt sind unter n-Butylacrylat, 2-Ethylhexylacrylat und Vinylacetat.

**10.** Beschichteter mineralischer Formkörper, erhältlich nach einem Verfahren gemäß einem der vorhergehenden Ansprüche.

**11.** Mittel zur Beschichtung mineralischer Formkörper, bestehend aus drei voneinander getrennten Zubereitungen, die aus den Monomeren A, B und gegebenenfalls C aufgebaute Copolymerisate in dispers verteilter Form als filmbildende Bestandteile enthalten, wobei

- die Monomere A ausgewählt sind unter Vinylaromaten und Methacrylsäureestern von $C_1$-$C_4$-Alkanolen,
- die Monomere B ausgewählt sind unter Methacrylsäureestern von $C_5$-$C_{12}$-Alkanolen, Acrylsäureestern von $C_1$-$C_{12}$-Alkanolen und Vinylestern aliphatischer Carbonsäuren und
- die Monomere C davon verschiedene ethylenisch ungesättigte Monomere umfassen,
  wobei die erste Zubereitung eine Pigmentvolumenkonzentration von weniger als 20, die zweite Zubereitung eine Pigmentvolumenkonzentration von 10 bis 70 und die dritte Zubereitung eine PVK von weniger als 50 aufweist, wobei die Pigmentvolumenkonzentration der ersten Zubereitung um einen Wert von mindestens 10 kleiner ist als die der zweiten Zubereitung.

## Claims

**1.** A process for coating mineral moldings with aqueous preparations which comprise, as film-forming constituents, disperse copolymers built up from the monomers A, B and, if desired, C, where

- the monomers A have been selected from the group consisting of vinylaromatics and methacrylates of $C_1$-$C_4$ alkanols,
- the monomers B have been selected from the group consisting of methacrylates of $C_5$-$C_{12}$ alkanols, acrylates of $C_1$-$C_{12}$ alkanols and vinyl esters of aliphatic carboxylic acids, and
- the monomers C comprise ethylenically unsaturated monomers other than the monomers A and B,

where, one after the other, a first preparation with a pigment volume concentration below 20 is applied to the mineral molding, with drying if desired, a second preparation with a pigment volume concentration of from 10 to 70 is applied, with drying if desired, and a third preparation with a pigment volume concentration below 50 is applied, where the value of the pigment volume concentration of the first preparation is at least 10 below that of the second preparation.

**2.** A process as claimed in claim 1, where, at least for the first preparation, a copolymer is used which comprises, incorporated into the polymer as monomer C, at least one ethylenically unsaturated sulfonic acid and/or one ethylenically unsaturated silane.

**3.** A process as claimed in claim 1 or 2, where the first preparation used comprises from 0.5 to 10% by weight, based on the copolymer, of a compound of the formula I

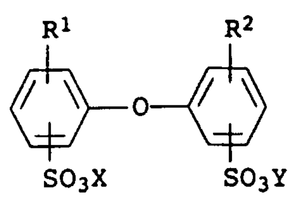

(I)

where $R^1$ or $R^2$ are hydrogen or $C_4$-$C_{24}$-alkyl, but are not simultaneously hydrogen, and X and Y are alkali metal ions and/or ammonium ions.

**4.** A process as claimed in any one of the preceding claims, where the copolymers contain at least 80% by weight

of monomers A and B incorporated into the polymer.

**5.** A process as claimed in any one of the preceding claims, where identical monomers A and/or identical monomers B are selected for the copolymers of at least two preparations.

**6.** A process as claimed in any one of the preceding claims, where the proportional quantities of the monomers A to B in the copolymers of two preparations applied one after the other differ by less than 30%.

**7.** A process as claimed in any one of the preceding claims, where, at least for the first and the second preparation, identical copolymers are used.

**8.** A process as claimed in any one of the preceding claims, where use is made of a first preparation with a pigment volume concentration of from 0 to 10, a second preparation with a pigment volume concentration of from 20 to 50 and a third preparation with a pigment volume concentration of from 0 to 45.

**9.** A process as claimed in any one of the preceding claims, where the monomers A have been selected from the group consisting of methyl methacrylate and styrene, and the monomers B have been selected from the group consisting of n-butyl acrylate, 2-ethylhexyl acrylate and vinyl acetate.

**10.** A coated mineral molding obtainable by a process as claimed in any one of the preceding claims.

**11.** A composition for coating mineral moldings, composed of three separate preparations which comprise, as film-forming constituents, disperse copolymers built up from the monomers A, B and, if desired, C, where

- the monomers A have been selected from the group consisting of vinylaromatics and methacrylates of $C_1$-$C_4$ alkanols,

- the monomers B have been selected from the group consisting of methacrylates of $C_5$-$C_{12}$ alkanols, acrylates of $C_1$-$C_{12}$ alkanols and vinyl esters of aliphatic carboxylic acids, and

- the monomers C comprise ethylenically unsaturated monomers other than the monomers A and B,

where the first preparation has a pigment volume concentration below 20, the second preparation has a pigment volume concentration of from 10 to 70 and the third preparation has a pigment volume concentration below 50, where the value of the pigment volume concentration of the first preparation is at least 10 below that of the second preparation.

## Revendications

**1.** Procédé pour le revêtement de corps façonnés minéraux par des compositions aqueuses, qui contiennent des copolymères élaborés à partir des monomères A, B et le cas échéant C dans une forme répartie de manière dispersée comme constituants formant des films,

- les monomères A étant choisis parmi les aromatiques de vinyle et les esters de l'acide méthacrylique d'alcanols en $C_1$ à $C_4$,

- les monomères B étant choisis parmi les esters de l'acide méthacrylique d'alcanols en $C_5$ à $C_{12}$, les esters de l'acide acrylique d'alcanols en $C_1$ à $C_{12}$ et les esters vinyliques d'acides carboxyliques aliphatiques et

- les monomères C comprenant des monomères éthyléniquement insaturés qui sont différents des monomères A et B,

dans lequel on applique sur les corps façonnés minéraux successivement une première composition avec une concentration volumique en pigments inférieure à 20, on sèche le cas échéant, on applique une deuxième composition avec une concentration volumique en pigments de 10 à 70, on sèche le cas échéant et on applique une troisième composition avec une concentration volumique en pigments inférieure à 50, la concentration volumique en pigments de la première composition étant au moins 10 fois inférieure à celle de la deuxième composition.

**2.** Procédé selon la revendication 1, dans lequel on utilise au moins pour la première composition un copolymère qui contient, à l'état copolymérisé, comme monomère C au moins un acide sulfonique éthyléniquement insaturé et/ou un silane éthyléniquement insaturé.

**3.** Procédé selon la revendication 1 ou 2, dans lequel on utilise une première composition qui contient 0,5 à 10% en poids, par rapport au copolymère, d'un composé de formule I

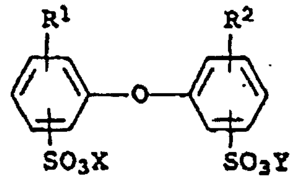

(I)

dans laquelle $R^1$ ou $R^2$ signifient hydrogène ou alkyle en $C_4$ à $C_{24}$ et ne représentent pas simultanément hydrogène et X et Y représentent des ions de métal alcalin et/ou des ions d'ammonium.

**4.** Procédé selon l'une quelconque des revendications précédentes, dans lequel les copolymères contiennent au moins 80% en poids de monomères A et B copolymérisés.

**5.** Procédé selon l'une quelconque des revendications précédentes, dans lequel on choisit, pour les copolymères d'au moins deux compositions, des monomères A identiques et/ou des monomères B identiques.

**6.** Procédé selon l'une quelconque des revendications précédentes, dans lequel, dans les copolymères de deux compositions appliquées successivement, le rapport des quantités des monomères A à B diffère de moins de 30%.

**7.** Procédé selon l'une quelconque des revendications précédentes, dans lequel on utilise au moins pour la première et la deuxième composition des copolymères identiques.

**8.** Procédé selon l'une quelconque des revendications précédentes, dans lequel on utilise une première composition présentant une concentration volumique en pigments dans la plage de 0 à 10, une deuxième composition présentant une concentration volumique en pigments dans la plage de 20 à 50 et une troisième composition avec une concentration volumique en pigments dans la plage de 0 à 45.

**9.** Procédé selon l'une quelconque des revendications précédentes, dans lequel les monomères A sont choisis parmi le méthacrylate de méthyle et le styrène et les monomères B parmi l'acrylate de n-butyle, l'acrylate de 2-éthylhexyle et l'acétate de vinyle.

**10.** Corps façonné minéral revêtu, pouvant être obtenu suivant un procédé selon l'une quelconque des revendications précédentes.

**11.** Agent pour le revêtement de corps façonnés minéraux, constitué par trois compositions séparées les unes des autres, qui contiennent des copolymères élaborés à partir des monomères A, B et le cas échéant C dans une forme répartie de manière dispersée comme constituants formant des films,

- les monomères A étant choisis parmi les aromatiques de vinyle et les esters de l'acide méthacrylique d'alcanols en $C_1$ à $C_4$,
- les monomères B étant choisis parmi les esters de l'acide méthacrylique d'alcanols en $C_5$ à $C_{12}$, les esters de l'acide acrylique d'alcanols en $C_1$ à $C_{12}$ et les esters vinyliques d'acides carboxyliques aliphatiques et
- les monomères C comprenant des monomères éthyléniquement insaturés qui sont différents de ceux-ci,

dans lequel la première composition présente une concentration volumique en pigments inférieure à 20, la deuxième composition présente une concentration volumique en pigments de 10 à 70 et la troisième composition présente une concentration volumique en pigments inférieure à 50, la concentration volumique en pigments de la première composition étant au moins 10 fois inférieure à celle de la deuxième composition.